# EUROPÄISCHE PATENTSCHRIFT

(11) **EP 0 728 780 B1**
(45) Veröffentlichungstag und Bekanntmachung des Hinweises auf die Patenterteilung: **08.09.1999**
(21) Anmeldenummer: 96102119.3
(22) Anmeldetag: 14.02.1996
(51) Int. Cl.: C08F 290/04

(54) **Pfropfpolymere mit Emulgatoreigenschaften**
Graftpolymers with emulgator properties
Polymères greffés à propriétés émulsifiantes

(30) Priorität: 24.02.1995 DE 19506399
(43) Veröffentlichungstag der Anmeldung: 28.08.1996
(73) Patentinhaber: Röhm GmbH, 64293 Darmstadt (DE)
(72) Erfinder: Kaufmann, Marita, Dr., D-64331 Weiterstadt (DE); Siol, Werner, Dr., D-64297 Darmstadt (DE); Koralewski, Klaus, D-64560 Riedstadt (DE); Nuccio, Santa M., D-64331 Weiterstadt (DE); Wittkowski, Andrea, D-64846 Gross-Zimmern (DE)

(56) Entgegenhaltungen:
- EP-A- 0 406 906
- EP-A- 0 522 376
- US-A- 5 155 172
- US-A- 5 483 003
- SHERIDAN M S ET AL: "SYNTHESIS OF WELL-DEFINED ALL-ACRYLIC GRAFT COPOLYMERS" MAKROMOLEKULARE CHEMIE, MACROMOLECULAR SYMPOSIA, Bd. 64, 1.Dezember 1992, Seiten 85-111, XP000334555

## Beschreibung

### Gebiet der Erfindung

Die Erfindung betrifft Pfropfpolymere mit Emulgatoreigenschaften, gewonnen durch Copolymerisation von Makromonomeren aufgebaut aus repetierenden C₈-C₃₀-Alkoholmethacrylateinheiten mit einer (Meth)acrylendgruppe mit hydrophilen, insbesondere wasserlöslichen radikalisch polymerisierbaren Acrylverbindungen in einem wassermischbaren Lösungsmittel.

### Stand der Technik

Blockcopolymere, die aus hydrophilen und hydrophoben Blöcken aufgebaut sind, können als Emulgatoren für die verschiedensten Anwendungen dienen. In der Regel werden derartige Blockcopolymere durch "lebende" anionische Polymerisation oder durch Pfropfung einer anderen Monomerspecies auf ein vorgegebenes, chemisch verschiedenes Polymermolekül realisiert (vgl. H. F. Mark et al. Encyclopedia of Polymer Science & Engineering Vol. 2, pg. 412 - 413, J. Wiley 1985; G. Allen, J.C. Bevington Comprehensive Polymer Science, Vol. 4, pg. 248 - 250, Pergamon Press 1989).
Ein weiterer Zugang zu Polymeren mit Emulgatoreigenschaften besteht in der Copolymerisation von Makromonomeren (MM) mit chemisch verschiedenen Comonomeren zu sog. Kammpolymeren (vgl. Allen-Bevington, loc.cit., pg. 249). Einen relativ einfachen Zugang zu den Makromonomeren eröffnet z.B. die US-A 5 254 632. Dabei polymerisiert man z.B. (Meth)acrylsäureester in Gegenwart eines hydroxylgruppenhaltigen Schwefelreglers und setzt die so erhaltenen, hydroxylgruppenterminierten Poly(meth)acrylate mit Methylmethacrylat zum Poly(meth)acrylatmakromonomeren mit Methacrylatendgruppen um.

### Aufgabe und Lösung

Das geschilderte Verfahren des US-Patents hat einen günstigen Zugang zu den vielfältig einsetzbaren Polymeremulgatoren eröffnet. Es besteht indessen nach wie vor die Aufgabe, eine einfache Herstellungsweise für Polymeremulgatoren zur Verfügung zu stellen, die ausgezeichnete Emulgierwirkung zeigen und auch sonst den Anforderungen der Technik möglichst weitgehend angepaßt sein sollten. Als wichtige technische Aufgabengebiete seien das Emulgieren von Wachsen, Fetten und Ölen in Wasser genannt.
Es wurde nun gefunden, daß die erfindungsgemäß erhaltenen Pfropfpolymere PFP ausgezeichnete Emulgatoreigenschaften besitzen.
Die erfindungsgemäßen Pfropfpolymere PFP werden dadurch erhalten, daß man Makromonomere MM aufgebaut aus repetierenden Einheiten ausgewählt aus C₈-C₃₀-Alkylmethacrylat mit einer (Meth)acryloylendgruppe mit hydrophilen, insbesondere wasserlöslichen radikalisch polymerisierbaren Acrylverbindungen (Monomere HAM) in einem Lösungsmittel LM, das sich zu wenigstens 20 Gew.-Teilen in Wasser von 20 Grad C löst, radikalisch copolymerisiert.
Vorzugsweise setzt man als Makromonomere MM die aus der US-A 5,254,632 bekannten Makromonomeren der allgemeinen Formel I 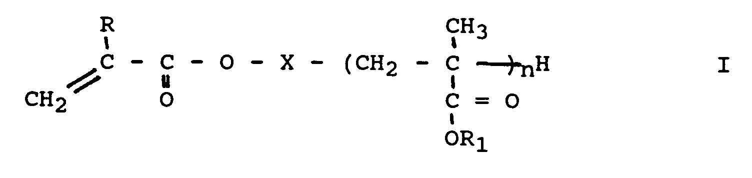 worin
- R: für Wasserstoff oder Methyl
- X: für einen biradikalischen Rest und
- R₁: für einen Alkylrest mit 8 bis 30 Kohlenstoffatomen steht, mit der Maßgabe, daß n so bemessen ist, daß das Molekulargewicht Mₙ der Makromonomeren I im Bereich 500 bis 100 000 g/mol liegt,
ein.
Besonders bevorzugt sind z.B. Makromonomere der Formel I, aufgebaut aus den Estern von technichen Alkoholgemischen, z.B. Gemischen von C₁₁-C₁₆-Methacrylaten mit einer mittleren C-Zahl von 13,2 - 13,8 (Ester ausgehend von Handelsprodukt DOBANOL 25L der Shell AG).
Als hydrophile, radikalisch polymerisierbare Acrylverbindungen HAM seien neben der Acrylsäure selbst insbesondere solche monomeren Derivate verstanden, deren Wasserlöslichkeit bei 20 Grad C mindestens 70 g/l vorzugsweise 200 g/l beträgt (vgl. H. Rauch-Puntigam, Th. Völker, Acryl- und Methacrylverbindungen).
Aus Gründen der Hydrophilie werden Alkylsubstituenten in den Acrylverbindungen HAM gewählt, die die C₃-Zahl, insbesondere die C₂-Zahl in geschlossener Folge nicht überschreiten. Insbesondere kommen als hydrophile bzw. wasserlösliche Acrylverbindungen HAM Monomere der allgemeinen Formel II 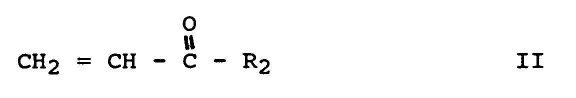 worin
R₂ für -OR₃, -NR₄R₅ steht und worin R₃ für Wasserstoff oder für einen mit mindestens einem hydrophilen Rest A ausgewählt aus der Gruppe bestehend aus dem Hydroxyrest, einem -NR₄'R₅' Rest, dem Sulfonsäure-rest, dem Carboxylrest oder Carboxamidrest oder einem, an sich wasserlöslichen, fünf- bis sechsgliedrigen Heterocyclussubstituierten Alkylrest mit 2 bis 20 Kohlenstoffatomen, wobei die Kohlenstoffkette durch Etherbrücken unterbrochen sein kann und worin R₄ und R₅ für Wasserstoff oder für einen gegebenenfalls mit einem hydrophilen Rest A substituierten Alkylrest mit 1 bis 6 Kohlenstoffatomen stehen oder worin R₄ und R₅ gegebenenfalls unter Einbeziehung weiterer Stickstoff- oder Sauerstoffatome einen 5- oder 6-gliedrigen Heterocyclus bilden und worin R₄' und R₅' für Wasserstoff oder einen Alkylrest mit 1 bis 6 Kohlenstoffatomen steht, wobei -NR₄'R₅' gegebenenfalls quaterniert sein kann oder wenn R₄ für Wasserstoff steht R₅ für eine Carboxamidogruppe stehen kann.

Vorzugsweise sind die hydrophilen bzw. wasserlöslichen Acrylverbindungen HAM ausgewählt aus der Gruppe bestehend aus Acrylsäure, Acrylamid, Hydroxyalkylestern der Acrylsäure wie 2-Hydroxyethylacrylat, 2-Hydroxypropylacrylat, aminsubstituierte Alkylester wie 2-Diethylaminoethylacrylat, 2-(1-Imidazolyl)ethylacrylat, 2-(4-Morpholinyl)ethylacrylat, 2-Trimethylammoniumethylacrylat-Salz, Hydroxyalkylsubstituierten Acrylamiden wie N-(2-Hydroxyethyl)acrylamid, N-(3-Hydroxy-2,2-dimethylpropyl)methacrylamid, N-Dimethylaminomethylacrylamid, N-Acryloidopyrrolidon-2-, N-Acrylamidomethylpyrrolidon, N-(1-Piperidinylmethyl)-acrylamid, quaternäre Ammoniumverbindungen wie N-Trimethylammoniumpropylacrylamid-Salz, Sulfonsäurederivate wie 2-Acrylamido-2-methylpropansulfonsäure oder den N-Methacryloylharnstoff. Besonders bevorzugt ist die Acrylsäure selbst.
Das Gewichtsverhältnis der Makromonomeren MM zu den copolymerisierenden Monomeren (mit den hydrophilen bzw. wasserlöslichen Acrylverbindungen als Hauptbestandteil) in den Pfropfpolymeren PFP wird im wesentlichen durch das Anwendungsgebiet bestimmt. Es kann von 1 bis 95 Gew.-% Makromonomer, respektive 99 bis 5 Gew.-% Comonomeren schwanken.
So stellen Copolymere mit einem Anteil von z.B. 2 - 40 Gew.-% eines Makromonomeren aus C₁₁-C₁₆-Alkylestern der Methacrylsäure gute Öl-in-Wasser-Emulgatoren dar, was ein wichtiges Anwendungsgebiet eröffnet, während Copolymere mit sehr hohem Anteil an derartigen Makromonomeren (z.B. 70 - 90 Gew.-% auch Wasser in Öl emulgieren können.
In der Regel beträgt der Anteil der hydrophilen bzw. wasserlöslichen Acrylverbindungen HAM > 50 und bis zu 100 Gew.-% der mit den Makromonomeren copolymerisierten Monomeren. Weitere, in untergeordneten Anteilen von HAM verschiedene, copolymerisierbare Monomere sind beispielsweise solche der Formel III 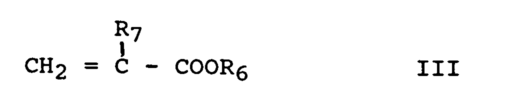 worin R₇ für Wasserstoff oder Methyl und R₆ für einen Alkylrest mit 1 bis 8, vorzugsweise bis 4 Kohlenstoffatomen steht. Genannt seien beispielsweise das Ethylacrylat oder Styrol und die mit C₁-C₄-Alkyl substituierten Homologen des Styrols.
Der Anteil der (Meth)acrylsäurederivate an den Comonomeren ist auf < 20 Gew.-% (bezogen auf das eingesetzte Makromonomere MM) beschränkt. Besonders gute Emulgierwirkung zeigen Copolymere, aufgebaut aus 1 - 95 Gew.-% eines Makromonomeren aus C₁₁-C₁₆-Alkylestern der Methacrylsäure mit einem Molekulargewicht Mn im Bereich 800 - 30.000 g/mol und 99 - 5 Gew.-% Monomeren HAM. Besondere Bedeutung kommt dem Lösungsmittel LM zu. So belegen die vorliegenden Ergebnisse, daß die hydrophoben Makromonomeren MM nicht lösungsmittelfrei mit den hydrophilen Acrylverbindungen HAM zu Kammpolymeren copolymerisiert werden.
Als Lösungsmittel LM kommen insbesondere solche infrage, die eine Löslichkeit von wenigstens 20 Gew.-% in Wasser bei Raumtemperatur (20 Grad C) besitzen. Dabei handelt es sich in der Regel um solche, an sich gebräuchliche Lösungsmittel, die wenigstens ein Sauerstoffatom oder/und ein Stickstoffatom im Molekül aufweisen.
Geeignete Lösungsmittel gehören beispielsweise der Gruppe der Ether oder der Ester an, wobei noch freie OH-Gruppen anwesend sein können. Genannt seien Mono-, Di- oder Triethylenglykolmonoalkylether, wie z.B. Diethylenglykolmonobutylether (= Butyldiglykol) oder die entsprechenden Propylenoxidderivate. Besonderes Interesse kann z.B. das 1-Butoxy-2-propanol (DOWANOL ® PnB der Fa.Dow Chemical) beanspruchen.

Besonders bevorzugt sind Lösungsmittel LM die einen Siedepunkt > 150 Grad C und einem Flammpunkt > 100 Grad C aufweisen.
Als Radikalinitiatoren dienen vorteilhaft an sich bekannte, insbesondere Perverbindungen wie z.B. Perester in Mengen von 0,01 bis 0,5 Gew.-% bezogen auf die Monomeren. Die Molekulargewichte der Copolymeren aus den Makromonomeren MM und den hydrophilen bzw. wasserlöslichen polymerisierbaren Acrylverbindungen HAM können in relativ weitem Bereich angesiedelt sein. Im allgemeinen liegen die Molekulargewichte M_{w} im Bereich 2.000 - 5.000.000 g/mol, insbesondere 10.000 bis 200.000 g/mol. (Bestimmung durch Gelpermeationschromatographie, vgl. H.F. Mark et al. Encyclopedia of Polymer Science & Engineering, Vol. 10, pg. 1 - 19, J. Wiley 1987). Zur Regelung des Molekulargewichts können an sich bekannte Regler, beispielsweise Schwefelregler, insbesondere Alkylthiole wie z.B. Dodecylmercaptan in den an sich üblichen Mengen, wie z.B. 0,002 bis 2 Gew.-% bezogen auf die Monomeren eingesetzt werden (vgl. H.Rauch-Puntigam, Th. Völker, Chemie der Acryl- und Methacrylverbindungen, Springer-Verlag 1967).
Besonderes Interesse verdienen jedoch auch sehr niedermolekulare Copolymere mit einem M_{w} im Bereich 2.000 bis 30.000 g/mol. Es sei darauf hingewiesen, daß es sich bei den niedermolekularen Copolymeren aus den Makromonomeren MM und den Acrylverbindungen HAM in strengem Sinn nicht um Kammpolymere sondern im allgemeinen um 2-Block-Copolymere handelt. Derartige 2-Block-Strukturen, beispielsweise aufgebaut aus 10 Gew.-% eines niedermolekularen Makromonomeren aus C₁₁-C₁₆-Alkylestern der Methacrylsäure und 90 Gew.-% Acrylsäure enthalten zwar einen nennenswerten Anteil an reiner Polyacrylsäure aber in der Regel kein freies Makromonomer mehr. Gerade niedermolekulare Copolymere aus Acrylsäure und dem C₁₁-C₁₆-Alkylester-Makromonomeren stellen demnach Blends dar aus dem Copolymerisat des genannten Makromonomeren mit Acrylsäure und gebildeter reiner Polyacrylsäure.

Die vorliegende Erfindung kann sich vorteilhaft des Verfahrens zur Herstellung von Makromonomeren der allgemeinen Formel I 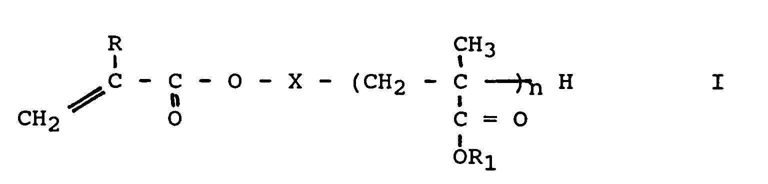 worin
- R: für Wasserstoff oder Methyl
- X: für einen biradikalischen Rest und
- R₁: für einen Alkylrest mit 8 bis 30 Kohlenstoffatomen steht, mit der Maßgabe, daß n so bemessen ist, daß das Molekulargewicht M der Makromonomeren I im Bereich 500 bis 100.000 g/mol liegt,
gemäß DE-A 41 21 811 bzw. US-A 5,254,632 bedienen, wobei man monomere Ester der Formel IV 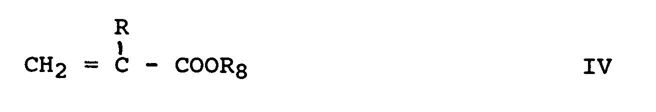 worin
- R₈: für einen Alkylrest mit 1 bis 8 Kohlenstoffatomen steht mit einem hydroxylgruppenterminierten Polyalkylmethacrylat der Formel III 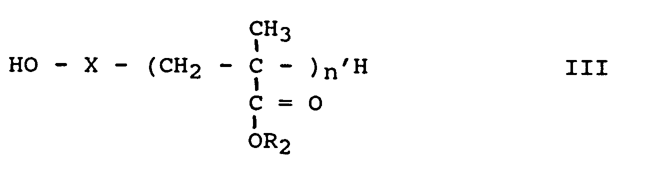
worin
- X und R₂: die oben bezeichneten Bedeutungen besitzen mit der Maßgabe, daß n' mit n übereinstimmt unter Abspaltung des Alkohols HOR₃
umestert, wobei die Verbindung der Formel I gebildet wird.

Vorzugsweise steht der biradikalische Rest X für eine mindestens zwei- und bis 30-gliedrige Kohlenwasserstoff-Kette, vorzugsweise mit einer -S-Brücke direkt anschließend an den polymeren Teil von I, wobei gegebenenfalls bis 9 Kohlenstoffglieder durch Ethersauerstoff ersetzt sein können. Ferner kann im Rest X die Kette noch durch funktionelle Reste der Formel 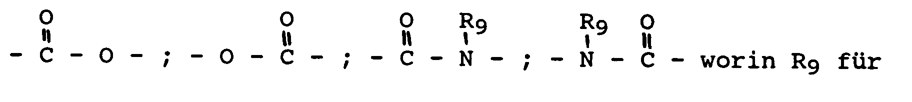 worin R₉ für Wasserstoff oder einen Alkylrest mit 1 - 8 Kohlenstoffatomen steht, oder einen Phenylrest, unterbrochen sein.

Die Makromonomeren der Formel I lassen sich, wie bereits vorstehend ausgeführt, durch Copolymerisation mit den hydrophilen bzw. wasserlöslichen Acrylverbindungen zu den Pfropfpolymeren PFP mit Emulgatoreigenschaften umsetzen.

### Herstellung der Pfropfpolymeren PFP

Man gibt vorteilhafterweise das Makromonomere MM und die hydrophile bzw. wasserlösliche radikalisch polymerisierbare Acrylverbindung HAM zusammen mit einem Mehrfachen des Gewichts des Monomeren (als Anhalt sei das 2,5 ± 2-fache genannt) an Lösungsmittel LM unter einem Schutzgas wie z.B. Argon vor und erwärmt auf höhere Temperatur, beispielsweise auf 80 Grad C. Dazu gibt man vorzugsweise einen Regler, insbesondere einen Schwefelregler wie Dodecylmercaptan in Mengen von z.B. 0,01 Gew.-% bezogen auf die Monomeren, vorzugsweise in etwas Lösungsmittel LM gelöst. Die Polymerisation wird durch tropfenweise Zugabe eines an sich bekannten Radikalinitiators, wie beispielsweise eines Peresters - genannt sei z.B. tert.-Butylperneodecanoat im Bereich etwa 0,1 Gew.-% (bezogen auf die Monomeren) - in durch LM verdünnter Form (als Anhalt seien ca. 4 %ige Lösungen genannt) ausgelöst. Die Polymerisation verläuft innerhalb eines gewissen Zeitraums - genannt seien ca. 80 Minuten - ab, wobei die Innentemperatur in der Regel ansteigt, beispielsweise auf ca. 90 Grad C. Im weiteren Verlauf hält man die Innentemperatur zweckmäßig durch Außenkühlung auf dem gewünschten Wert.
Man rührt nach Beendigung der Initiatorzugabe noch nach, genannt sei etwa 1 Stunde. Nach dem Abkühlen auf Raumtemperatur erhält man in der Regel eine homogene, viskose, fast klare Polymerdispersion. Die Reinigung des Reaktors kann auf einfachste Weise durch Ausspülen mit Wasser vorgenommen werden.
Die so erhaltenen Dispersionen sind gut mit Wasser verdünnbar. So kann beispielsweise beim Verdünnen mit Wasser einen 5 %ige Dispersion in Wasser hergestellt werden.
Lösungen der erfindungsgemäßen Pfropfpolymeren PFP in einem geeigneten Lösungsmittel LM, beispielsweise im Falle der erwähnten Mischung aus den Pfropfpolymeren der Makromonomeren aus C₁₁-C₁₆-Alkylestern mit Acrylsäure und Polyacrylsäure in z.B. 3-Butoxy-2-propanol eignen sich unmittelbar zum Emulgieren von Fetten und Ölen in Wasser.

### Vorteilhafte Wirkungen

Die emulgatorwirksamen Pfropfcopolymerisate PFP zeichnen sich u.a. durch ihre relativ leichte Zugänglichkeit aus, die auch eine breite Palette von Möglichkeiten hinsichtlich der Pfropfmonomeren HAM eröffnet. Ein besonderer Vorteil der Pfropfcopolymeren PFP liegt in der Emulgierung öllöslicher Substanzen in Wasser bzw. im Einsatz dieser Polymerer als Verteiler oder Hilfsverteiler bei der Suspensions- oder Emulsionspolymerisation oder in der Waschmittel- bzw. der Lederindustrie zu sehen.

Die folgenden Beispiele dienen zur Erläuterung der Erfindung.

### BEISPIELE

### A. Herstellung der Pfropfpolymeren PFP

### Beispiel A-1:

- 36 g: des Makromonomeren aus Beispiel B1 (J = 10,8 ml/g, Funktionalität > 0,9)
- 144 g: Acrylsäure
- 420 g: 3-Butoxy-2-propanol (DOWANOL ® PnB)
werden in einem Rührreaktor unter Schutzgas (Argon) vorgelegt und auf 80 Grad C erwärmt. Nach Zugabe von 0,018 g n-Dodecylmeraptan, gelöst in 1 g 3-Butoxy-2-propanol wird durch Zutropfen in 4 g einer 4 %igen Lösung von tert.-Butylperneodecanoat in 3-Butoxy-2-propanol innerhalb von 80 Minunten die Monomermischung polymerisiert.
Durch die Polymerisation steigt die Innentemperatur innerhalb von 20 Minuten auf 90 Grad C. Im weiteren Verlauf wird die Innentemperatur durch Außenkühlung bei 90 Grad C gehalten.
Nach Beendigung der Initiatorzugabe läßt man 1 Stunde rühren (Nachreaktion).
Nach dem Abkühlen auf Raumtemperatur erhält man eine homogene, viskose, fast klare Dispersion.
- Feststoffgehalt:: 29 %.
Die Dispersion ist gut mit Wasser verdünnbar. So kann beispielsweise beim Verdünnen mit Wasser eine 5 %ige Dispersion in Wasser hergestellt werden.

Der Reaktor kann durch einfaches Ausspülen mit Wasser gereinigt werden.
Die so hergestellte Polymerlösung in 3-Butoxy-2-propanol eignet sich unmittelbar zum Emulgieren von Fetten und Ölen in Wasser.

### Beispiel A-2

Man wiederholt den Versuch gemäß Beispiel 1, wählt jedoch eine andere Monomerzusammensetzung:

### Einwaage:

- 9 g: des Makromonomeren aus Beispiel B-1
- 171 g: Acrylsäure

Man erhält eine bei Raumtemperatur homogene, viskose, fast klare Dispersion (Feststoffgehalt: 30 %, die mit Wasser zu einer homogenen, weißen Dispersion verdünnt werden kann.

### B. Herstellung der Methacryloyl-terminierten Macromonomeren MM

### Beispiel B-1

### Verwendete Apparatur:

2-l-Vierhalsrundkolben mit Rührer, Thermometer, Rückflußkühler mit Wasserabscheider, Siedekapillare zum Einleiten getrockneter Luft.

### Durchführung.

In der oben beschriebenen Apparatur löst man 400 g des Hydroxy-terminierten Polyalkylmethacrylats aus Beispiel C-1 (siehe unten) zusammen mit 0,2 g 4-Methyl-2,6-di-tertbutylphenol in 600 g Methylmethacrylat und erhitzt so lange zum Sieden, bis kein Wasser mehr abgeschieden wird. Anschließend werden 5 ml Isopropyltitanat zugegeben. Man erhitzt weitere 3 Stunden zum Sieden, läßt dann auf 88 Grad C abkühlen und tropft 5 ml Wasser zu. Der völlig erkaltete Rückstand wird durch Filtration über einen Druckfilter (Filterschicht Seitz S500) von dem entstehenden Niederschlag befreit. Das klare, farblose Filtrat wird mit Hilfe eines Rotationsverdampfers bis zur Trockene eingeengt.
Man erhält ein Methacryloyl-terminiertes Makromonomeres mit J = 10,8 ml/g, Funktionalität > 0,9.

### C. Synthese der Hydroxylgruppenterminierten Poly-C₈-C₃₀-Alkylmethacrylate

### Beispiel C-1:

8.000 g des Methacrylsäureesters aus einem handelsüblichen Gemisch von ca. 1,0 Gew.-% C₁₁-, 16 - 26 Gew.-% C₁₂-, 24 - 34 Gew.-% C₁₃, 24 - 34 Gew.-% C₁₄-, 16 - 26 Gew.-% C₁₅-, 1,0 Gew.-% C₁₆-Alkanol mit mittlerer C-Zahl 13,2 - 13,8 (Handelsprodukt DOBANOL ® 25 L der Shell AG), werden in einem Reaktor mit Kühlmantel, Rührer, Rückflußkühler, Tropftrichter und Thermometer auf 85 Grad C erwärmt. Zur Inertisierung wird Argon eingeleitet.
Wenn die Innentemperatur 85 Grad C erreicht hat, werden 80 g Mercaptoethanol zugesetzt. Danach wird die Polymerisation durch Zugabe von 0,5 g einer 20 %igen Lösung von Butylperneodecanoat (75 %ig in Aliphaten) in der Monomermischung gestartet.

Die Polymerisation beginnt sofort. Zum Aufrechterhalten der Polymerisation werden innerhalb von 30 Minuten weitere 3 g der 20 %igen Lösung von t-Butylperneodecanoat in der Monomermischung zudosiert.
Die Innentemperatur steigt dabei auf 100 Grad C. Anschließend wird über einen Zeitraum von 6 Stunden 30 g einer Lösung von 20 Gew-% t-Butyl-per-2-ethylhexanoat in der Monomermischung zudosiert. Die Temperatur im Polymerisationsgefäß wird dabei auf 100 - 110 Grad C gehalten.
Anschließend wird zur Endpolymerisation noch 1 Stunde bei 110 Grad C gerührt, danach wird unter Rühren abgekühlt. Man erhält eine niedrigviskose Polymerschmelze. Der Gehalt an Restmonomeren beträgt 2,1 %, J = 10,8 ml/g.
Das so erhaltene flüssige Polymere wird direkt zur Umesterung mit Methylmethacrylat (B1) eingesetzt.

## Patentansprüche

1. Pfropfpolymere mit Emulgatoreigenschaften,
dadurch gekennzeichnet,
daß man Makromonomere MM aufgebaut aus repetierenden Einheiten ausgewählt aus C₈-C₃₀-Alkylmethacrylat mit einer (Meth)acryloylendgruppe mit hydrophilen radikalisch polymerisierbaren Acrylverbindungen HAM in einem Lösungsmittel LM, das sich zu wenigstens 20 Gew.-% in Wasser von 20 Grad C löst, radikalisch copolymerisiert.

2. Pfropfpolymere mit Emulgatoreigenschaften gemäß Anspruch 1, dadurch gekennzeichnet, daß man als Makromonomere MM solche der allgemeinen Formel I 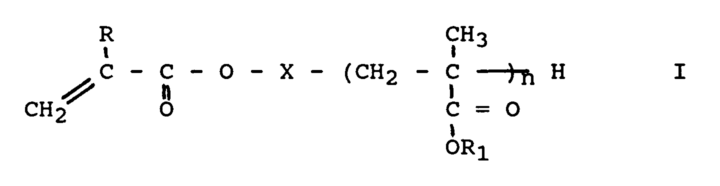 worin
R für Wasserstoff oder Methyl
X für einen biradikalischen Rest und
R₁ für einen Alkylrest mit 8 bis 30 Kohlenstoffatomen steht, mit der Maßgabe, daß n so bemessen ist, daß das Molekulargewicht Mn der Makromonomeren I im Bereich 500 bis 100.000 g/mol liegt,
einsetzt.

3. Pfropfpolymere mit Emulgatoreigenschaften gemäß den Ansprüchen 1 und 2, dadurch gekennzeichnet, daß man als hydrophile, radikalisch polymerisierbare Acrylverbindungen HAM solche einsetzt, deren Wasserlöslichkeit bei 20 Grad C mindestens 70 g/l beträgt.

4. Pfropfpolymere mit Emulgatoreigenschaften gemäß Anspruch 3, dadurch gekennzeichnet, daß man als hydrophile, radikalisch polymerisierbare Acrylverbindungen HAM solche einsetzt, deren Wasserlöslichkeit bei 20 Grad C mindestens 200 g/l beträgt.

5. Pfropfpolymere mit Emulgatoreigenschaften gemäß Anspruch 4, dadurch gekennzeichnet, daß die hydrophilen, radikalisch polymerisierbaren Acrylverbindungen HAM ausgewählt sind aus der Gruppe bestehend aus Acrylsäure, Acrylamid , der hydroxy- und/oder aminosubstituierten oder sulfonsäuresubstituierten Alkylester oder -amide der Acrylsäure.

6. Pfropfpolymere mit Emulgatoreigenschaften, dadurch gekennzeichnet, daß in den Acrylverbindungen HAM die Alkylsubstituenten die C₂-Zahl in geschlossener Folge nicht überschreiten.

7. Pfropfpolymere mit Emulgatoreigenschaften gemäß den Ansprüchen 1 bis 5, dadurch gekennzeichnet, daß der Anteil der Acrylverbindungen HAM an den copolymerisierten Monomeren mehr als 50 und bis 100 Gew.-% beträgt.

8. Pfropfpolymere mit Emulgatoreigenschaften gemäß den Ansprüchen 1 bis 7, dadurch gekennzeichnet, daß der Anteil der Makromonomeren MM an den Pfropfpolymeren 1 bis 95 Gew.-% beträgt.

9. Pfropfpolymere mit Emulgatoreigenschaften gemäß den Ansprüchen 1 bis 8, dadurch gekennzeichnet, daß die Pfropfpolymere Molekulargewichte M_{w} im Bereich 1.000 bis 5.000.000 g/mol besitzen.

10. Pfropfpolymere mit Emulgatoreigenschaften gemäß Anspruch 9 mit einem Molekulargewicht M_{w} im Bereich 2.000 - 30.000 g/mol.

## Claims

1. Graft polymers with emulsifier characteristics, characterised in that macro monomers MM, built up of repeating units selected from C₈-C₃₀ alkyl methacrylate with a (meth)acryloyl end group with hydrophilic radically-polymerisable acryl compounds HAM in a solvent LM, which dissolves by at least 20% by weight in water at 20° C, are radically copolymerised.

2. Graft polymers with emulsifier characteristics according to claim 1, characterised in that macro monomers MM of general formula 1 are used: 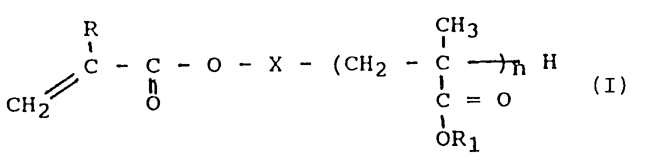 wherein
R denotes hydrogen or methyl
X denotes a biradical group and
R₁ denotes an alkyl group with 8 to 30 carbon atoms with the proviso that n is measured so that the molecular weight Mn of the macro monomers I lies in the range 500 to 100,000 g/mol.

3. Graft polymers with emulsifier characteristics according to claims 1 and 2, characterised in that hydrophilic radically-polymerisable acryl compounds HAM are used which have a water solubility of at least 70g/l at 20° C.

4. Graft polymers with emulsifier characteristics according to claim 3, characterised in that hydrophilic radically-polymerisable acryl compounds HAM are used which have a water solubility of at least 200g/l at 20° C.

5. Graft polymers with emulsifier characteristics according to claim 4, characterised in that the hydrophilic radically-polymerisable acryl compounds HAM are selected from the group comprising acrylic acid, acryl amide, the hydroxy and/or amino-substituted, or sulphonic acid-substituted, alkyl ester or amide of acrylic acid.

6. Graft polymers with emulsifier characteristics, characterised in that the alkyl substituents in the acryl compounds HAM do not exceed the C₂ number in closed sequence.

7. Graft polymers with emulsifier characteristics according to claims 1 to 5, characterised in that the proportion of acryl compounds HAM is more than 50 and up to 100% by weight of the copolymerised monomers.

8. Graft polymers with emulsifier characteristics according to claims 1 to 7, characterised in that the proportion of macro monomers MM is 1 to 95% by weight of the grafting polymers.

9. Graft polymers with emulsifier characteristics according to claims 1 to 8, characterised in that the grafting polymers have molecular weights M_{w} in the range 1,000 to 5,000,000 g/mol.

10. Graft polymers with emulsifier characteristics according to claim 9 with a molecular weight M_{w} in the range 2,000 to 30,000 g/mol.

## Revendications

1. Polymères greffés ayant des propriétés d'agent émulsionnant,
caractérisés en ce qu'
on copolymérise par voie radicalaire des macromonomères MM constituée d'unités qui se répètent choisies parmi dés méthacrylates d'alkyle en C₈ à C₃₀ ayant un groupe terminal (méth)acryloyle, avec des composés acryle hydrophiles polymérisables par voie radicalaire (HAM) dans un solvant LM qui se dissout pour au moins 20 % en poids dans l'eau à 20°C.

2. Polymères greffés ayant des propriétés d'agent émulsionnant conformément à la revendication 1,
caractérisés en ce qu'
on met en oeuvre comme macromonomère MM ceux de formule générale I 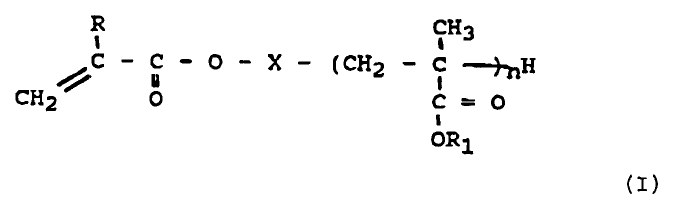 dans laquelle
R représente de l'hydrogène ou un méthyle.
X représente un reste biradicalaire et,
R₁ représente un radical alkyle ayant de 8 à 30 atomes de carbone,
avec la restriction que n est déterminé de sorte que le poids moléculaire Mn des macromonomères I se situe dans la zone de 500 à 100.000 g/mol.

3. Polymères greffés ayant des propriétés d'agent émulsionnant, conformément aux revendications 1 et 2,
caractérisés en ce qu' on met en oeuvre comme composés acryle hydrophiles, polymérisables par voie radicalaire (HAM) ceux dont la solubilité dans l'eau s'élève au moins à 70 g/l à 20°C.

4. Polymères greffés ayant des propriétés d'agent émulsionnant, conformément à la revendication 3,
caractérisés en ce qu'
on met en oeuvre comme composés acryle hydrophiles, polymérisables par voie radicalaire (HAL) ceux dont la solubilité dans l'eau à 20°C s'élève à au moins 200 g/l.

5. Polymères greffés ayant des propriétés d'agent émulsionnant, conformément à la revendication 4,
caractérisés en ce que
les composés acryle (HAM) hydrophiles, polymérisables par voie radicalaire, sont choisis dans le groupe consistant en l'acide acrylique, l'acrylamide, les esters d'alkyle ou les amides substitués par un hydroxy et/ou un amino ou les esters d'alkyle substitués par un acide sulfonique d'acide acrylique.

6. Polymères greffés ayant des propriétés d'agent émulsionnant,
caractérisés en ce que
dans les composés acryle (HAM) les substituants alkyle ne dépassent pas le nombre de C2 en série continue.

7. Polymères greffés ayant des propriétés d'agent émulsionnant, conformément aux revendications 1 à 5,
caractérisés en ce que
la proportion des composés acryle (HAM) pour les monomères copolymérisés, s'élève à plus de 50 et jusqu'à 100 % en poids.

8. Polymères greffés ayant des propriétés d'agent émulsionnant, conformément aux revendications 1 à 7,
caractérisés en ce que
la proportion des macromonomères MM pour les polymères greffés s'élève de 1 à 95 % en poids.

9. Polymères greffés ayant des propriétés d'agent émulsionnant, conformément aux revendications 1 à 8,
caractérisés en ce que
les polymères greffés possèdent des poids moléculaires Mw dans la plage allant de 1000 à 5.000.000 g/mol.

10. Polymères greffés ayant des propriétés d'agent émulsionnant, conformément à la revendication 9, avec un poids moléculaire Mw dans la plage de 2000 à 30.000 g/mol.
